# EUROPEAN PATENT SPECIFICATION

(11) **EP 0 845 206 B1**
(45) Date of publication and mention of the grant of the patent: **16.04.2003**
(21) Application number: 97203382.3
(22) Date of filing: 04.11.1997
(51) Int. Cl.: A01K 1/06, F16B 19/10, F16B 19/00

(54) **Feeding rack**
Fressgitter
Cornadis

(30) Priority: 05.11.1996 NL 1004436
(43) Date of publication of application: 03.06.1998
(73) Proprietor: REDNIPS HOLDING B.V., 9281 LE Harkema (NL)
(72) Inventor: Timmermans, Hubertus Renier Maria, 9801 MC Zuidhorn (NL); Rikhof, Johannes Hendrikus, 7588 RV Beuningen (NL); Stunnebrink, Marco Dimphina Henricus, 7553 HT Hengelo (NL)
(74) Representative: Ferguson, Alexander

(56) References cited:
- EP-A- 0 063 184
- EP-A- 0 322 023
- EP-A- 0 562 678
- EP-A- 0 766 013
- WO-A-88/05872
- DE-A- 3 439 451
- DE-A- 4 216 620
- DE-U- 9 413 403
- FR-A- 2 203 454
- NL-A- 9 200 982

## Description

The invention relates to a feeding rack as decribed in the preamble of claim 1. Such a feeding rack is known from DE-U-94 13 403.0.

Feeding racks are generally known and are amongst others described in European patent 322.023. Two embodiments can mainly be discerned. In the first embodiment the tilting pipe can be tilted between said first position and said second position. In this embodiment the tilting pipe is pivotably attached to a buckled spike, which also extends between the lower girder and the upper girder. The hinge point here is in the middle or somewhat below the vertical middle of the feeding rack. The portion of the buckled spike which extends above the hinge point diverges in relation to the vertical spike situated on the other side of the feeding opening. The portion of the buckled spike which extends below the hinge point, runs substantially vertical, down to the lower girder. The tilting pipe can for that reason tilt no further than the aforementioned second position, at least until abutting against the lower portion of the buckled spike. In the first position of the tilting spike an entrance for the head of a cow is provided, so that she can reach the fodder with her head, said fodder being offered on the other side of the rack. The head of the cow will then move downwards, the tilting spike being touched at a location below the hinge point at a given moment, so that the tilting spike will tilt from the first position to the second position till it will slap against the buckled spike. In the upper girder a locking flap is accommodated which works in one direction, below which the upper end of the tilting pipe can pass, but it will not be able to move back after the locking flap has fallen back to a blocking position. The tilting pipe is thus detained in returning direction by the locking flap and detained in continuing movement by the lower part of the buckled spike. During feeding the cow will regularly shake her head and neck, so that the tilting pipe will be slapped against the lower portion of the buckled spike and back against the locking flap. Both while tilting from the first position to the second position of the tilting pipe, as during the feeding the sound of metal on metal can be generated thereby, which, if one considers that hundreds of feeding places can be accommodated in a stable, may involve a tremendous noise.

In the second type of feeding rack the lower portion of the buckled spike also runs divergingly in relation to the vertical spike, so that the tilting spike can slap through from the second position to a third position -safety position-, in which the feeding opening forms a substantially inverted V-shaped passage. Such a feeding rack is also indicated as safety feeding rack, because the cow, in the lying position can turn her head to some extent when necessary, and then withdraw it in order to come free from the feeding rack. In order to secure the tilting spike in the second position, usually two locking flaps which work in opposite directions are accommodated in the upper girder. For both locking flaps operating means on the operating rod are necessary. The distance between the stop surfaces of both locking flaps is larger than the size of the upper end of the tilting spike, so that the tilting pipe will rattle in the second position which is detrimental to the working conditions of the employees in the stable.

Noise may cause stress with the animals present, which results in fall in production.

The invention has the object to provide an improvement in at least one of the aforementioned imperfections in existing feeding racks, and to that end provides a feeding rack of the kind described in claim 1.

By providing a stop surface made of sound muffling material such as plastic, for the locking flap in the upper girder, on the upper end of the tilting spike itself, a possibility is created to come to a further noise reduction in the feeding rack in a simple way.

The upper end preferably comprises second stop surfaces, which are arranged -and preferably protrude radially from the rest of the tilting spike- such as to be able to abut against the fixed spikes in the feeding rack in the first position, and which are made of sound muffling material such as plastic.

The first and/or second sound muffling stop surfaces also provide a sound muffling contact with a possible flight, which is attached to an auxiliary operating rod, which is slidably accommodated to bring the tilting spike from the first to the second position to pull it up or, in case of a safety feeding rack, the tilting spike to the further tilted-through position. In this way a third function is fulfilled.

At the upper side of the upper end of the tilting spike preferably fourth stop surfaces are provided, which are also made of sound muffling material, such as plastic and can abut against the lower side of the locking means for lifting them at tilting therealong from the first position to the second position.

The upper end of the tilting spike is accommodated in the upper girder via a slot-shaped opening therein, and can be moved back and forth somewhat in a direction transverse to the main plane of the feeding rack. The upper end of the tilting spike can then abut against the boundaries of the slot-shaped lower opening, which involves a considerable production of noise. To counteract this noise the upper end of each tilting spike, preferably on both sides, which are situated substantially parallel to the plane of the feeding rack, are provided with fifth stop surfaces, which are made of sound muffling material, such as plastic.

In case of a safety feeding rack the upper end of the tilting spike can furthermore be preferably provided with sixth stop surfaces of sound muffling material, such as plastic, which can cooperate with a blocking or locking means, such as a locking flap, which is situated near the second position and works in a direction opposite to the locking means mentioned first.

In the case of a safety feeding rack the upper end of the tilting spike is further preferably provided with seventh stop surfaces of sound muffling material, such as plastic, which form an abutment for the tilting spike against the vertical spike which bounds the other side of the feeding place.

According to the invention it is furthermore provided that one or several of the aforementioned, more or less horizontally working plastic stop surfaces form a whole with each other, in the shape of a roundgoing surface. A ring of sound muffling material such as plastic, can be thought of, which ring can be simply attached onto the upper end of the tilting spike and will then be able to fulfil six of the aforementioned functions. It would be advantageous if the roundgoing surface would form a whole with an upper plane of sound muffling material, such as plastic, in order to thus form a cap of sound muffling material, such as plastic, which is attached onto the tilting spike and can fulfil all seven aforementioned functions.

Such a cap can have a lower part, which is slid in a clamping manner on the pipe-shaped tilting spike and an upper part which forms a whole with it and which forms the roundgoing surface.

Such a cap can also easily be attached on existing feeding racks, for instance after sawing off the upper part of a tilting spike, after which the (plastic) cap can easily be put onto that upper end. The attachment can for instance be effected by means of a snap connection.

It is noted that from the European patent application 0.562.678 a feeding rack is known, in which near the top and/or the bottom of the tilting spikes holes are provided in which little rubber rods are clamped, which protrude from the tilting spike to abut mufflingly against the slanting, upper portion of the buckled spike and the lower, vertical portion of the buckled spike, respectively, in the first position and in the second position, respectively. Near the upper end the tilting spike can on its other side moreover be provided with a similar little rubber rod, which can mufflingly abut a downwardly fixed stop protruding from the upper girder, with which a tilting through past the second position of the tilting spike is prevented. However, in this way no reduction is obtained of the noise generated by the movement of the tilting spikes against either the locking flaps, or parts of the upper girder.

It is further noted that from the German patent application 34.39.451 a feeding rack is known in which the locking flaps are born to the upper girder by means of an intermediate rubber bearing block, a rubber block being placed within the slantingly sawed off upper end of the tilting spike, said block being permitted to run up with its upper plane against the lower side of the metal locking flap and to abut with a portion facing away from the first position against a fixed stop for the second position, which stop protrudes downwards from the upper girder. For the noise reduction in the first position a separate rubber stop is provided on the buckled spike, which stop moreover is extendable to keep the tilting spike in the second position.

The invention further provides a feeding rack, in which the locking means is formed by a locking flap, which is arranged in the upper girder to be pivotable about a horizontal hinge axis and has a locking part situated on the one side of the hinge axis and an operating part on the other side of the hinge axis, the upper girder having a horizontal upper wall in which at the location of the operating parts of the locking flaps finger operating holes are arranged, the hinge axis being situated near the upper wall and the operating part extending substantially horizontal when in the locking position of the locking flap.

In this way, independent of whether or not sound muffling stop surfaces are present on the upper end of the tilting spike, an improved operating convenience is obtained in the feeding rack construction, which in itself is known from Dutch patent application 92.00982. Because of the measures according to the invention the finger operating hole will be sealed when in the closed position -the second position of the tilting spike-. Because the operating part is situated directly behind the finger operating hole and perpendicular to the direction of approach of the operating finger, better engaging possibilities are provided for the finger and the operation will be very safe and reliable,

For further reduction of noise the locking flaps are preferably made of plastic.

The invention will be elucidated on the basis of a number of illustrative embodiments shown in the attached drawings.

It is shown in:
figure 1 a view on a feeding rack according to the invention, with tilting spikes;
figure 2 a view slanted from above, of a cut-away upper girder of the feeding rack of figure 1;
figure 3 the picture of figure 2, however now in a vertical plane;
figure 4 a vertical cross-section through the spike cap of the feeding rack of figures 1-3;
figure 5 a vertical cross-section, in plane perpendicular to the plane of figure 4, of the same spike cap;
figure 5A a view on the spike cap of the figures 4 and 5;
figure 6A-6C a top view, a side view and a perspective view from below respectively of a locking flap for the feeding rack according to the invention; and
figure 7 a perspective view, from below, on an alternative locking flap according to the invention.

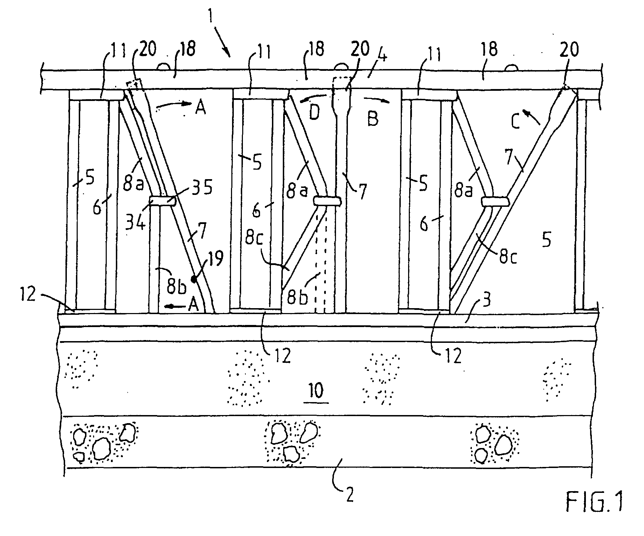

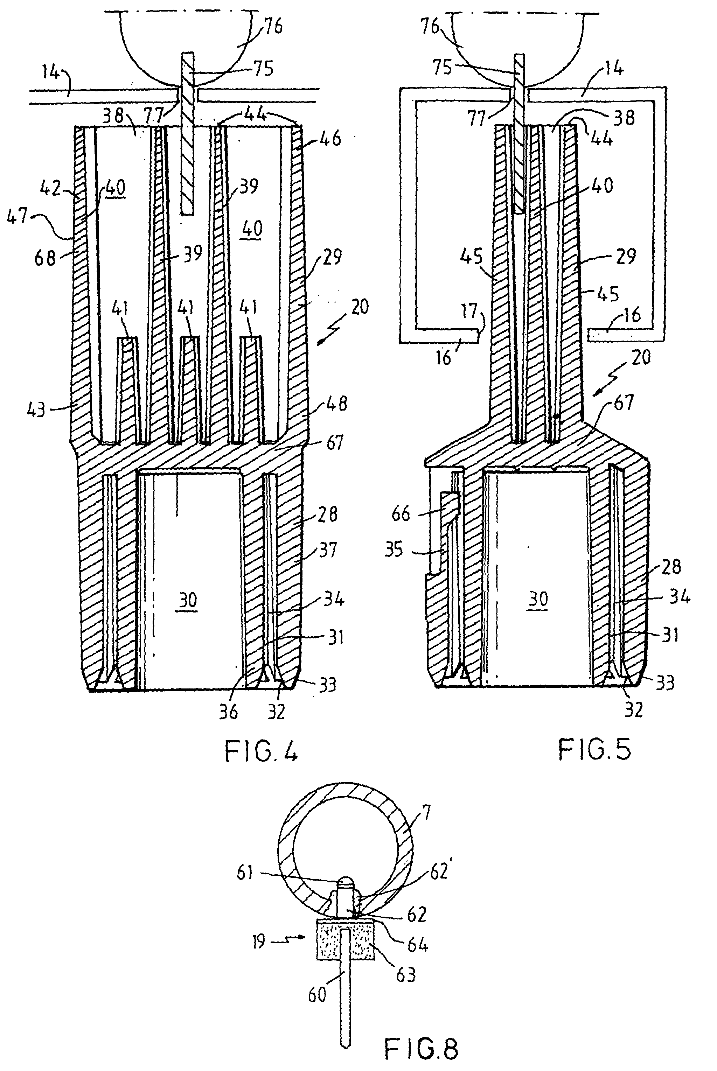

The feeding rack 1 shown in figure 1 comprises in principle a lower girder 3 and an upper girder 4, in which a slideable operating rod and locking flaps 18 -at least one for each feeding opening- operated by said rod are accommodated. The lower girder 3 and the upper girder 4 are attached to column pipes which are not further indicated, said pipes being clamped with a lower portion in the concrete stable floor 2. On the stable floor 2 and against the column pipes a longitudinal panel 36 is placed, with which the fodder is detained in the direction of the stand/lying place of the cattle.

In the feeding rack 1 a number of feeding openings are realized, of which three are shown here. It is noted that the left feeding opening differs from the middle and right feeding opening. The latter two feeding openings belong to a so-called safety feeding rack, in which the tilting spike 7 can tilt through. Below this will be further gone into.

Vertical spikes 5 and 6, as well as a buckled spike 8 extend between the lower girder 3 and the upper girder 4. The spikes 5 and 6 are attached to the upper girder 4 respectively lower girder 3, at their upper end by means of attachment plates 11 and at their lower end by means of attachment plates 12, for instance by welding. The buckled spike 8 is at its upper end attached also to attachment plate 11 and at its lower end to the lower girder 3 At a location in the middle or a little below the middle of the distance between the upper and lower girder the buckle is provided, to which a bracket 34 is mounted, which bracket at its end carries a hinge pin 35, on which the hinge spike 7 is mounted. In the hinge point a spring can be provided, which to some degree forces the tilting spike to the position indicated left in the feeding rack, the entry position. Here the feeding opening has a substantially V-shaped form, suitable to receive the head of a cow at the top, which cow after that can by moving head and neck downwards let the tilting spike turn in direction A, to the position indicated in figure 1 in the middle of the feeding rack. In that position the tilting spike is substantially vertical, and it could be locked by means of the locking flap 18. The feeding opening then has a substantially rectangular form, in which the distance between the tilting spike 7 and the vertical spike 5 is smaller than the width of the head of the cow.

In the middle of figure 1 two types of buckled spikes are shown. The lower portion of the buckled spike of the left feeding opening is shown once more by striped lines. Tilting spike 8 suitable for a safety feeding rack is depicted with full lines. The upper portion of the tilting spike 8a is identical to the upper portion 8a of the left feeding opening. Contrary to the lower portion 8b in the left feeding place the lower portion 8c however also runs diverging to the vertical spike 6 to be mounted thereon, so that tilting spike 7 can slap further in direction B, at least if the locking flap 18 is put out of action. Then the situation shown in figure 1 on the right can be obtained, the so-called safety position, in which the cow could possibly withdraw her head from the lower portion of the now inverted U-shaped feeding opening.

When the cow has been able to withdraw her head the tilting spike 7 will as a result of the aforementioned spring bias tend to rotate back in the direction C and, if the locking flaps 18 are suitably shaped, swing further in the direction D to come near the upper portion 8a of the buckled spike.

As a result of the touching by the cows and abutment at the end of the tilting movement the tilting spikes might cause a lot of contact noise. This is especially the case when slapping back the tilting spike to the entry position and into the catching position. With the measures according to the invention this contact noise is counteracted to an extensive degree.

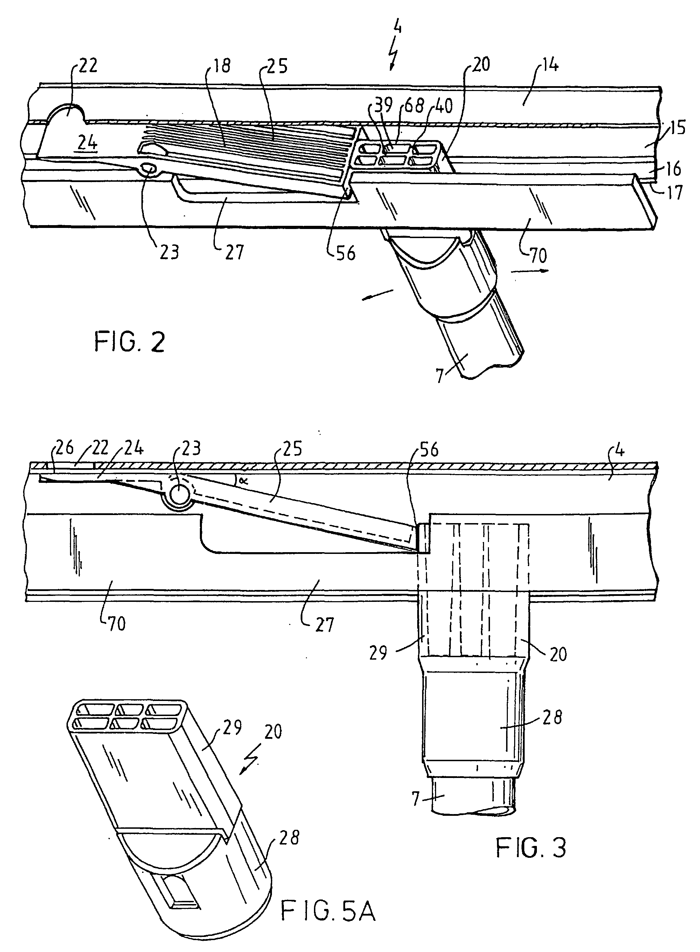

In figure 2 the upper girder 4 is shown in a cut-away condition. The upper girder comprises a tubular profile, which forms an elongated slit at the lower side, through which the upper ends of the tilting spikes can swing. The cross-section thus is substantially inverted U-shaped. Shown are the upper wall 14, a side wall 15, a half of the bottom walls 16 and its slit bounding side edge 17. Within the U-shaped profile, on the front side as seen on the drawing, a flat operating rod 17 is accommodated, which is slideable and is supported on the other half of the bottom wall 16 which is not shown. The operating rod 70 is provided with a recess 27 at each feeding place, in which recess the locking part 25 of locking flap 18 can fall in order to enter the path of tilting spike 7. It will be understood that a recess can alternatively be formed by the area between two elevations on the operating rod which are each provided at the location of a feeding opening. When the locking flap 18 has been brought out of the locking position the locking part 25 rests on top of the operating rod 70 and the tilting spike can be swung underneath of the locking part 25. The locking flap 18 is pivotably attached to the tubular profile, particularly the side walls 15 thereof, by means of the hinge pin 23 in a manner not further indicated. On the other side of the hinge 23 operating part 24 of the locking flap 18 is situated, which operating part has a flat operating plane 26 (see figure 3). In the upper wall 14 of the tubular profile operating holes 22 are arranged at each feeding place, said holes allowing passage to a finger of a farmer.

Special now is that the operating part 24 is situated at an angle α, which differs from 180°, in relation to the locking part. In this way it is realized that in the locking situation shown in figure 2a and 3 the upper plane 26 of the operating part 4 is parallel to the upper wall 14, at a minimal distance therefrom. In this way on the one hand a sealing of the operating hole 22 in the locking position is obtained, on the other hand the finger of the farmer will quickly make contact with the plane 26, because of which the operating of locking flap 18 takes place in a reliable way. It is furthermore possible to give the locking flap, which is preferably made of plastic, a striking colour, so that it will be immediately clear to the farmer where the operating hole for the locking flap is situated, in case several holes are arranged in the upper wall 14. It is furthermore possible to also form an elevation on the surface 26, which elevation at least reaches into the operating hole 22.

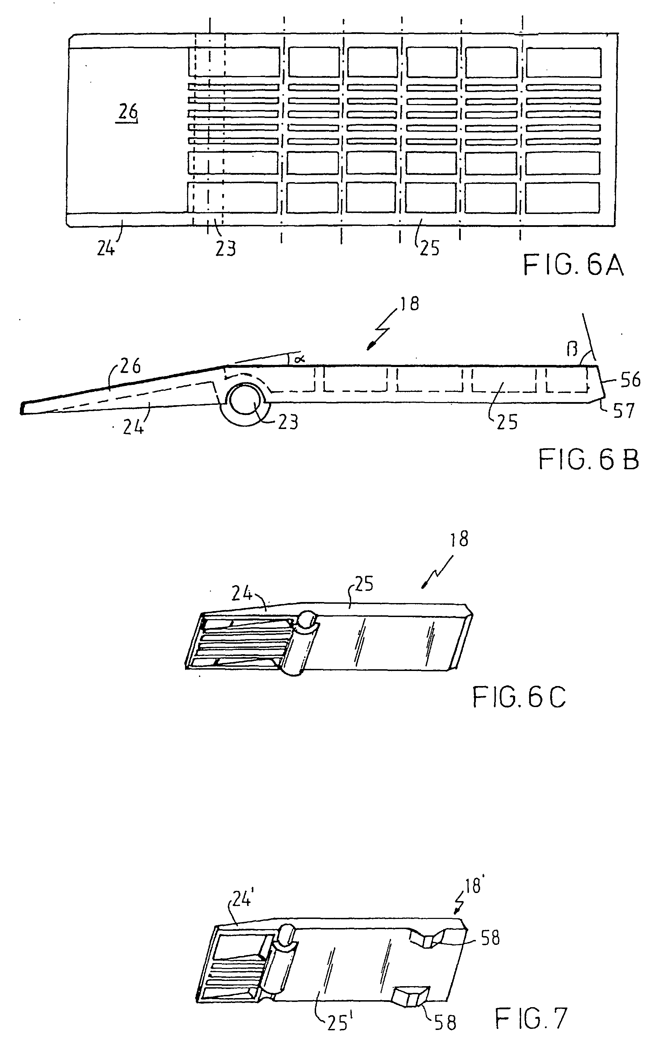

As can be seen in figures 6A and 6B, the locking flap 18 is at the end of the locking part provided with a locking plane 56, which is at an angle β in relation to the main planes of the locking part 25, in which the angle β is equal to 90°- α. The end of the locking part 25 is furthermore provided with a supporting plane 57, which is perpendicular to the locking plane 56. With supporting plane 57 the locking flap rests on the boundaries of the recess 27 in the operating rod 70.

In figure 7 locking flap 18' is shown which is similar to locking flap 18 but particularly suitable for so-called broad upper girders. Locking part 25' is at the bottom side provided with cams 58 integrally formed therewith, which have the effect that, if the operating rod is operated to move locking flap 18' out of the locking position, they shorten the necessary sliding stroke, because they constitute a lowering of the lower surface of the locking part and therefore quickly abut the as seen in figure 3 left boundary of recess 27. In this case a cam 58 is provided on both sides, to keep a choice regarding the side of the tilting spike where the operating rod comes to lie in the broad upper girder.

In the figures 2 and 3 furthermore the tilting spike 7 can be seen, which at the upper end is provided with a plastic cap 20 put onto it. This cap 20 has replaced the ordinary upper end of the round tilting spike 7, which tilting spike 7 is made of steel. In the case of a new feeding rack the tilting spike 7 is kept shorter than usual for that reason, in the case of an old feeding rack the upper end of the tilting spike, which is usually flattened, may be sawed off.

As can be seen in detail in figures 4, 5 and 5A the plastic spike cap 20 consists substantially of a lower part 28 and an upper part 29. The lower part 28 serves to secure the spike cap 20 tightly, against axial movement and rotation, on the tilting spike.

The lower part 28 comprises a roundgoing wall 37, which at the lower end has been made smaller, with an inner pilot edge 32 and an outer slanting wall 33, to prevent injuries. On the inner side the roundgoing wall 37 is provided with vertical ribs 34, which form radially inwardly directed, axial clamping faces. Situated radially within is a roundgoing wall 36, which with the roundgoing wall 37 determines a slit-shaped space 31, in which the upper end of the tilting spike 7 can be tightly accommodated. The roundgoing wall 36 determines an inner cavity 30, because of which the roundgoing wall 36 when putting up on the tilting spike 7 can evade a little to the inside should such be necessary.

The roundgoing wall 37 is furthermore at least at one location, at a distance from the lower end provided with a recess, in which a snap tongue 35 with snap end 66 is situated. The snap end 66 can cooperate with a hole made in suitable place in tilting spike 7, so that after putting up the spike cap 20 on the tilting spike 7 the spike cap 20 is secured against rotation and sliding upwards.

The lower part 28 is firmly connected to the upper part 29 by means of intermediate part 67, said upper part having a rectangular horizontal cross-section, as can be seen in figure 5A. The upper part 29 is designed hollow out of material saving and material processing considerations. Nevertheless it is pursued to design the upper part 29 as rigid as possible, which has been realized by the grid-shaped cross-section (see figure 2), with roundgoing wall 68 and intermediate walls 39 and 40. Thus chambers 38 (six here) are defined, from the bottom of which the strengthening ribs 41 reach upwards. The rigid ribs 41 reach at least the level of the lower wall of the upper girder.

The spike cap 20, in particular its upper part 29, unites no fewer than seven stop surfaces. To be discerned are a first stop surface 42, which can cooperate with locking surface 56 of locking flap 18. Below it and contiguously to it a second stop surface 43 is situated, which in a muffling way can abut the upper end of buckled spike 8a. The first stop surfaces 42 and the second stop surfaces 43 underneath them, have sufficient length to form third engaging surfaces 47 which in a muffling way can be engaged by a pulling up flight which is not further shown, which flight can be accommodated in the upper girder 4 and in a manner known per se can be active to force the tilting spike 7 to tilt in the direction A.

On the upper side the roundgoing wall 68 and the intermediate walls 39 and 40 form fourth stop surfaces 44, which can cooperate with the lower surface of locking part 25 of locking flap 18, in a movement in the direction A (figure 1). On either side, as shown in figure 5, are fifth stop surfaces 45, which abut mufflingly against the edges 17 of the tubular profile of the upper girder 4.

On the side facing away from the first and second stop surfaces the upper part 29 of the spike cap 20 is provided with a sixth stop surface 46, which in the same way as the first stop surface 42 can cooperate with a locking flap, which in relation to locking flap 18 and tilting spike 7 is arranged in the upper girder 4 in a mirror symmetrical way, in case of a safety feeding rack, as shown in the middle and the right of figure 1. Should there be no question of a safety feeding rack, then the fifth stop surface 46 can cooperate with a stop block fixedly fitted in the upper profile, which block is preferably made of plastic as well or another sound muffling material.

Finally the seventh stop surface 48 can be discerned, for muffled abutments against the vertical spike 5 which bounds the other side of the feeding opening.

The open upper side of the spike cap 20 makes it suitable to be locked by means of a stop pin 75 provided with an engaging and supporting thickening 76, which stop pin can be inserted in a hole 77 provided in the upper wall 14 of the upper girder 4 at the location of the feeding position and then in the open chambers of the spike cap 20 (see figures 4, 5). In this way the farmer can also notice immediately which tilting spikes are in the locked feeding position.

The material of which the flap 18 and the cap 20 are made is sound muffling, wear-resistant and strong. A suitable material is polypropene, but other suitable plastics or suitable natural rubbers can also be appropriate.

## Claims

1. Feeding rack (1) with a lower girder (3) and an upper girder (4), and a plurality of vertical parts connecting these girders to each other, comprising a plurality of substantially vertical spikes (5,6) spaced at regular intervals, each vertical spike bounding one side of a feeding place, which feeding places are bounded on the other side by means of a tilting spike (7) which is mounted in the feeding rack in a tiltable manner in order to be able to tilt between a first position, in which the tilting spike is slanting and the feeding opening forms a substantially V-shaped passage, and at least one second position, in which the tilting spike is substantially vertical, at least one locking means (18) for each tilting spike, and a operating rod (70) which extends parallel to the plane of the feeding rack and is provided with means for operating the locking means, each locking means (18) being provided with locking surfaces (56) for the tilting spike (7) which locking surfaces are facing away from the first position, wherein each tilting spike has an upper end that is located at a distance below the upper girder (4), wherein a cap (20) made of sound muffling material, such as plastic, is arranged on the upper end of each tilting spike and forms a first stop surface (42) cooperating with the locking surfaces, wherein the cap has an upper part (29) that is narrowed as considered in a vertical plane perpendicular to the main plane of the feeding rack, **characterized in that** the narrowed upper part (29) is provided with the first stop surface (42) and extends with its swinging path at leat partly within the upper girder (4), and **in that** the locking means (18) are acco modated within the upper girder (4).

2. Feeding rack according to claim 1, in which the narrowed upper part (29) comprises second stop surfaces (43), which are arranged -and preferably protrude radially from the rest of the tilting spike (7)- such to be able to abut against the fixed spikes (8a) in the feeding rack in the first position.

3. Feeding rack according to claim 1 or 2, in which the feeding rack (1) is furthermore provided with a slideable auxiliary operating rod, which is provided with flights situated within the upper girder for pulling up the tilting spike (7), which flight is provided with surfaces which cooperate with third stop surfaces (47) formed by the first (42) and/or second (43) stop surfaces and located on the narrowed upper part (29) of the cap, for having the tilting spike (7) tilted in a direction towards the second or a further tilted position when sliding the auxiliary operating rod, the third stop surfaces preferably extending in the longitudinal direction of the tilting spike at a location and along a length which coincides with the path of movement of the flight surfaces over the upper end of the tilting spike.

4. Feeding rack according to any one of the preceding claims, in which the narrowed upper part (29) comprises fourth stop surfaces (44), which are facing upwards and located such that the locking means (18) project in the swinging path thereof so that the upper part (29) can lift the locking means in a movement from the first position to the second position.

5. Feeding rack according to any one of the preceding claims, the narrowed upper part (29) of the cap comprising sides (45) situated on either side, which form fifth stop surfaces (45), of which the normal is substantially perpendicular to the plane of the feeding rack.

6. Feeding rack according to any one of the preceding claims, the upper girder (4) being provided with a further locking means for detaining the tilting spike from tilting from the second position to a further tilting, safety position, the further locking means being accommodated within the upper girder and provided with locking surfaces for the narrowed upper part (29), which locking surfaces are facing the first position, the narrowed upper part of the cap comprising sixth stop surfaces (46), which cooperate with the locking surfaces of the further locking means.

7. Feeding rack according to any one of the preceding claims, the narrowed upper part (29) comprising seventh stop surfaces (48), which are arranged -and preferably protrude radially from the tilting spike- such to be able to abut against the fixed spikes (5) of the feeding rack in a position further than the second position, that is in a tilted safety position.

8. Feeding rack according to any one of the preceding claims, in which the narrowed upper part (29) of the cap has a roundgoing surface of plastic material, which contains the first (42), second (43), third (47), fifth (45), sixth (46) and/or seventh (48) stop surfaces.

9. Feeding rack according to claim 8, in which the roundgoing surface forms a whole with an upper plane of sound muffling material, such as plastic, which forms the fourth stop surfaces (44).

10. Feeding rack according to claim 9, in which the plastic cap (20) has a lower part (28) which is slid in a clamping manner on the pipe-shaped tilting spike (7) and forms a whole with the narrowed upper part (29), and in which preferably the lower part (28) of the cap is provided with a snap finger (66), which fits into a snap opening arranged in the tilting spike.

11. Feeding rack according to any one of the preceding claims, whrein the upper girder (4) has a upper wall (14) which is provided with a hole (77) for stop pin (75) and the narrowed upper part of the cap forms a chamber (38) for receiving said stop pin.

12. Feeding rack according to any one of the preceding claims, wherein the locking means (18) is formed by a locking flap, which is made of sound muffling material such as plastic.

13. Feeding rack according to claim 12, wherein the locking flap is arranged in the upper girder (4) to be pivotable about a horizontal hinge axis (23) and has a locking part (25) situated on the one side of the hinge axis and an operating part (24) on the other side of the hinge axis, the upper girder having a horizontal upper wall (14) in which at the location of the operating parts of the locking flaps finger operating holes (22) are arranged, the hinge axis (23) being situated near the upper wall and the operating part extending substantially horizontal when the locking flap is in the locking position,

## Patentansprüche

1. Freßgitter (1) mit einem Unterträger (3) und einem Oberträger (4), und einer Anzahl vertikaler, diese Träger miteinander verbindender Teile, umfassend eine Anzahl auf regelmäßigem Abstand voneinander angeordneter, hauptsächlich vertikaler Stäbe (5,6), wobei jeder vertikale Stab eine Seite des Freßplatzes begrenzt, welche Freßplätze an der anderen Seite durch einen Kippstab (7) begrenzt sind, der auf kippbare Weise in dem Freßgitter befestigt ist, um zwischen einem ersten Stand, worin das Kipprohr schräg steht und die Freßöffnung einen hauptsächlich V-förmigen Durchgang bildet, und zumindest einem zweiten Stand, worin der Kippstab hauptsächlich vertikal steht, kippen zu können, zumindest ein Sperrmittel (18) für jeden Kippstab, und eine Bedienungsstange (70), welche sich parallel zu der Fläche des Freßgitters erstreckt und mit Mitteln zum Bedienen der Sperrmittel versehen ist, wobei jedes Sperrmittel (18) mit Sperroberflächen (56) für den Kippstab (7) versehen ist, welche Sperroberflächen von.dem ersten Stand abgekehrt sind, wobei jeder Kippstab ein auf einem Abstand unter dem Oberträger (4) gelegenes Oberende hat, wobei eine aus schalldämpfendem Material, wie Kunststoff, hergestellte Kappe (20) auf dem Oberende von jedem Kippstab angeordnet ist und eine mit den Sperroberflächen zusammenwirkende erste Anschlagoberfläche (42) bildet, wobei die Kappe ein Oberteil (29) hat, das, wenn in einer Vertikalfläche senkrecht auf der Hauptfläche des Freßgitters betrachtet, verengt ist, **dadurch gekennzeichnet, daß** das verengte Oberteil (29) mit einer ersten Anschlagoberfläche (42) versehen ist und sich mit seiner Schwenkbahn zumindest teilweise innerhalb des Oberträgers (4) erstreckt, und daß die Sperrmittel (18) innerhalb des Oberträgers (4) gelegen sind.

2. Freßgitter nach Anspruch 1, wobei das verengte Oberteil (29) zweite Anschlagoberflächen (43) umfaßt, welche angeordnet sind - und vorzugsweise radial von dem Rest des Kippstabes (7) herausstecken - um in dem ersten Stand an die festen Stäbe (8a) in dem Freßgitter anstoßen zu können.

3. Freßgitter nach Anspruch 1 oder 2, wobei das Freßgitter (1) weiter mit einer verschiebbaren Hilfsbedienungsstange versehen ist, welche mit innerhalb des Oberträgers gelegenen Mitnehmern versehen ist, um den Kippstab (7) hochzuziehen, welcher Mitnehmer mit Oberflächen versehen ist, die mit dritten durch die ersten (42) und/oder zweiten (43) Anschlagoberflächen gebildeten und auf dem verengten Oberteil (29) der Kappe gelegenen Anschlagoberflächen zusammenwirken, zum bei Verschiebung der Hilfsbedienungsstange Kippen lassen des Kippstabes (7) in eine Richtung auf den zweiten oder einen weiteren gekippten Stand, wobei die dritten Anschlagoberflächen sich vorzugsweise in der Längsrichtung des Kippstabes erstrecken auf einer Stelle und entlang einer Länge die mit der Bewegungsbahn der Mitnehmeroberflächen über das Oberende des Kippstabes zusammenfällt.

4. Freßgitter nach einem der vorhergehenden Ansprüche, wobei das verengte Oberteil (29) vierte Anschlagoberflächen (44) umfaßt, die aufwärts gekehrt sind und derartig gelegen sind, daß die Sperrmittel (18) in deren Schwenkbahn vorstehen, damit das Oberteil (29) die Sperrmittel in einer Bewegung von dem ersten Stand zu dem zweiten Stand heben kann.

5. Freßgitter nach einem der vorhergehenden Ansprüche, wobei das verengte Oberteil (29) der Kappe an beiden Seiten gelegene Seiten (45) umfaßt, die fünfte Anschlagoberflächen (45) bilden, wovon die Normale hauptsächlich senkrecht auf der Fläche des Freßgitters steht.

6. Freßgitter nach einem der vorhergehenden Ansprüche, wobei der Oberträger (4) mit einem weiteren Sperrmittel versehen ist, zum Zurückhalten des Kippstabes von einer Kippung von dem zweiten Stand zu einem weiteren gekippten Sicherheitsstand, wobei das weitere Sperrmittel innerhalb des Oberträgers gelegen ist und mit Sperroberflächen für das verengte Oberteil (29) versehen ist, welche Sperroberflächen dem ersten Stand zugekehrt sind, wobei das verengte Oberteil der Kappe sechste Anschlagoberflächen (46) umfaßt, die mit den Sperroberflächen des weiteren Sperrmittels zusammenwirken.

7. Freßgitter nach einem der vorhergehenden Ansprüche, wobei das verengte Oberteil (29) siebte Anschlagoberflächen (48) umfaßt, welche angeordnet sind - und vorzugsweise radial von dem Kippstab herausstecken - um in einem Stand, weiter als der zweite Stand, d.h. in einem gekippten Sicherheitsstand, an die festen Stäbe (5) des Freßgitters anstoßen zu können.

8. Freßgitter nach einem der vorhergehenden Ansprüche, wobei das verengte Oberteil (29) der Kappe eine umlaufende Oberfläche aus Kunststoffmaterial hat, welche die ersten (42), zweiten (43), dritten (47), fünften (45), sechsten (46), und/oder siebten (48) Anschlagoberflächen enthält.

9. Freßgitter nach Anspruch 8, wobei die umlaufende Oberfläche ein Ganzes mit einer aus schalldämpfendem Material, wie Kunststoff, hergestellten oberen Fläche, welche die vierte Anschlagoberflächen (44) bildet.

10. Freßgitter nach Anspruch 9, wobei die Kunststoffkappe (20) ein Unterteil (28) hat, das auf klemmende Weise auf dem rohrförmigen Kippstab (7) geschoben ist und ein Ganzes mit dem verengten Oberteil (29) bildet, und wobei das Unterteil (28) der Kappe vorzugsweise mit einem Schnappfinger (66) versehen ist, welcher in einer in dem Kippstab angeordneten Schnappöffnung passt.

11. Freßgitter nach einem der vorhergehenden Ansprüche, wobei der Oberträger (4) eine Oberwand (14) hat, welche mit einem Loch (77) für Anschlagstift (75) versehen ist, und das verengte Oberteil der Kappe eine Kammer (38) zum Empfangen des Anschlagstiftes bildet.

12. Freßgitter nach einem der vorhergehenden Ansprüche, wobei das Sperrmittel (19) durch eine aus einem schalldämpfendem Material, wie Kunststoff, hergestellte Sperrklappe gebildet ist.

13. Freßgitter nach Anspruch 12, wobei die Sperrklappe in dem Oberträger (4) angeordnet ist um drehbar rund eine horizontale Gelenkachse (23) zu sein und ein auf einer Seite der Gelenkachse gelegenes Sperrteil (25) hat und ein auf der anderen Seite der Gelenkachse gelegenes Bedienungsteil (24) hat, wobei der Oberträger eine horizontale Oberwand (14) hat, wobei an der Stelle der Bedienungsteile der Sperrklappen Fingerbedienungslöcher (22) angeordnet sind, wobei die Gelenkachse (23) nahe der Oberwand gelegen ist und das Bedienungsteil sich in dem Sperrstand der Sperrklappe hauptsächlich horizontal erstreckt.

## Revendications

1. Cornadis (1) avec une poutre inférieure (3) et une poutre supérieure (4) et une pluralité de pièces verticales reliant ces poutres entre elles, comportant une pluralité de pointes sensiblement verticales (5, 6) espacées à intervalles réguliers, chaque pointe verticale retenant un côté d'un emplacement d'alimentation, ces emplacements d'alimentation étant retenus de l'autre côté au moyen d'une pointe inclinable (7) montée dans le cornadis de façon inclinable afin de pouvoir s'incliner entre une première position, dans laquelle la pointe inclinable s'incline et l'ouverture d'alimentation forme un passage sensiblement en forme de V, et au moins une seconde position dans laquelle la pointe inclinable est sensiblement verticale, au moins un moyen de blocage (18) de chaque pointe inclinable, et une tige de contrôle (70) s'étendant parallèlement au plan du cornadis et comportant des moyens pour actionner les moyens de blocage, chaque moyen de blocage (18) comportant des surfaces de blocage (56) de la pointe inclinable (7), ces surfaces dé blocage étant orientées à l'opposé de la première position, dans lequel chaque pointe inclinable a une extrémité supérieure située à une distance au-dessous de la poutre supérieure (4), dans lequel un couvercle (20), fait d'un matériau d'insonorisation tel du plastique, est placé sur l'extrémité supérieure de chaque pointe inclinable et forme une première surface d'arrêt (42) coopérant avec les surfaces de blocage, ce couvercle comportant une parte supérieure (29) qui se rétrécit en considérant un plan vertical perpendiculaire au plan principal du cornadis, **caractérisé en ce que** la partie supérieure rétrécie (29) comporte la première surface d'arrêt (42) et s'étend selon un trajet d'oscillation contenu au moins en partie dans la poutre supérieure (4), et **en ce que** les moyens de blocage (18) sont disposés dans la poutre supérieure (4).

2. Cornadis selon la revendication 1, dans lequel la partie supérieure rétrécie (29) comporte des secondes surfaces d'arrêt (43) qui sont disposées, en formant de préférence une saillie, de façon radiale, depuis le reste de la pointe inclinable (7), afin de pouvoir venir en butée contre les pointes fixes (8a) du cornadis dans la première position.

3. Cornadis selon la revendication 1 ou 2, dans lequel le cornadis (1) comporte également une tige de commande auxiliaire coulissante, qui est équipée d'une raclette située dans la poutre supérieure pour tirer vers le haut la pointe inclinable (7), cette raclette comportant des surfaces qui coopèrent avec les troisièmes surfaces d'arrêt (47) constituées par la première (42) et/ou la seconde (43) surfaces d'arrêt et situées sur la partie supérieure rétrécie (29) du couvercle, de façon à incliner la pointe inclinable (7) vers la seconde position ou vers une position encore plus inclinée, lors du coulissement de la tige de commande auxiliaire, les troisièmes surfaces d'arrêt s'étendant de préférence dans la direction longitudinale de la pointe inclinable, à un emplacement et sur une longueur coïncidant avec le trajet de déplacement des surfaces de la raclette sur l'extrémité supérieure de la pointe inclinable.

4. Comadis selon l'une quelconque des revendications précédentes, dans lequel la partie supérieure rétrécie (29) comporte des quatrièmes surfaces d'arrêt (44), orientées vers le haut et placées de façon à ce que les moyens de blocage (18) soient en saillie dans le trajet d'oscillation, de façon à ce que la partie supérieure (29) puisse soulever les moyens de blocage lors d'un déplacement entre la première position et la deuxième position.

5. Comadis selon l'une quelconque des revendications précédentes, la partie supérieure rétrécie (29) du couvercle comportant des côtés (45) situés de part et d'autre, qui forment les cinquièmes surfaces d'arrêt (45), dont la normale est sensiblement perpendiculaire au plan du cornadis.

6. Cornadis selon l'une quelconque des revendications précédentes, la poutre supérieure (4) comportant d'autres moyens de blocage pour empêcher la pointe inclinable de s'incliner entre la deuxième position, ou position de sûreté, et une inclinaison supplémentaire, ces autres moyens de blocage étant logés dans la poutre supérieure et comportant des surfaces de blocage de la partie supérieure rétrécie (29), ces surfaces de blocage faisant face à la première position, la partie supérieure rétrécie du couvercle comportant des sixièmes surfaces d'arrêt (46), qui coopèrent avec les surfaces de blocage des autres moyens de blocage.

7. Cornadis selon l'une quelconque des revendications précédentes, la partie supérieure rétrécie (29) comportant des septièmes surfaces d'arrêt (48), disposées, et formant de préférence une saillie, de façon rádiale, depuis la pointe inclinable, afin de pouvoir abouter contre les pointes fixes (5) du cornadis, dans une position autre que la deuxième position, qui est la position d'inclinaison de sûreté.

8. Cornadis selon l'une quelconque des revendications précédentes, dans lequel la partie supérieure rétrécie (29) du couvercle comporte une surface arrondie de matière plastique, qui contient les première (42), seconde (43), troisième (47), cinquième (45), sixième (46) et/ou septième (48) surfaces d'arrêt.

9. Cornadis selon la revendication 8, dans lequel la surface arrondie forme un tout avec un plan supérieur en matériau d'insonorisation, par exemple du plastique, qui forme les quatrièmes surfaces d'arrêt (44).

10. Cornadis selon la revendication 9, dans lequel le couvercle de plastique (20) comporte une partie inférieure (28) qui coulisse de façon à être retenue par la pointe inclinable en forme de tube (7) et forme un tout avec la partie supérieure rétrécie (29), et dans lequel, de préférence, la partie inférieure (28) du couvercle comporte un levier à déclic (66) qui s'adapte dans une ouverture à déclic disposée dans la pointe inclinable.

11. Cornadis selon l'une quelconque des revendications précédentes, dans lequel la poutre supérieure (4) comporte une paroi supérieure (14) qui possède un trou (77) pour la goupille d'arrêt (75), et la partie supérieure rétrécie du couvercle forme une chambre (38) pour recevoir ladite goupille d'arrêt.

12. Cornadis selon l'une quelconque des revendications précédentes, dans lequel les moyens de blocage (18) sont constitués par un volet de blocage, fait d'un matériau insonorisant tel que le plastique.

13. Cornadis selon la revendication 12, dans lequel le volet de blocage est placé dans la poutre supérieure (4) de façon à pouvoir pivoter autour d'un axe de charnière horizontal (23) et comporte une partie de blocage (25), d'un côté de l'axe de charnière, et une partie actionnement (24), de l'autre côté de l'axe de charnière, la poutre supérieure comportant une paroi supérieure horizontale (14) dans laquelle, à l'emplacement de la partie actionnement, sont disposés des trous pour actionner les leviers du volet de blocage (22), l'axe de charnière (23) étant situé près de la paroi supérieure et de la partie actionnement s'étendant sensiblement à l'horizontale lorsque le volet de blocage est en position blocage.
